# EUROPEAN PATENT SPECIFICATION

(11) **EP 4 321 691 B1**
(45) Date of publication and mention of the grant of the patent: **14.10.2026**
(21) Application number: 22784195.4
(22) Date of filing: 07.04.2022
(51) Int. Cl.: E01C 19/15, E01C 19/20, E01C 19/22, E02F 3/76, E02F 3/80, E02F 3/815, E02F 3/96

(54) **GROUND LEVELLING MACHINE**
BODENNIVELLIERUNGSMASCHINE
MACHINE DE NIVELLEMENT DE TERRAINS

(30) Priority: 07.04.2021 ES 202130708 U
(43) Date of publication of application: 14.02.2024
(73) Proprietor: Villalba Hernández, Manuel, 50580 Vera de Moncayo Zaragoza (ES)
(72) Inventor: Villalba Hernández, Manuel, 50580 Vera de Moncayo Zaragoza (ES)
(74) Representative: Garavelli, Paolo
(86) International application number: PCT/ES2022/070220
(87) International publication number: WO 2022/214728

(56) References cited:
- ES-U- 1 136 555
- US-A- 2 986 828
- US-A- 4 585 075
- US-A- 5 199 196
- US-A- 5 442 990
- US-A1- 2007 025 834
- US-A1- 2019 040 606
- US-B1- 7 021 398
- US-B1- 7 063 166
- STANFORD: "1. Introduction to Human Behavioral Biology", YOUTUBE, XP055978233, Retrieved from the Internet <URL:https://www.youtube.com/watch?v=NNnIGh9g6fA> [retrieved on 20221107]

## Description

### TECNICAL FIELD

The object of the present invention is a piece of land leveling equipment, dragged or pushed by a tractor unit and configured for leveling or smoothing the rolling surfaces of roads regardless of whether the surface to be leveled is more or less compacted, or have more or less rocky surface. This object is achieved with the set of claims that accompany this descriptive report.

### BACKGROUND OF THE INVENTION

In the current state of the art, different self-propelled systems and many devices are described for leveling (smoothing) the rolling surfaces on roads or other types of terrain. Thus, front loaders and front cover blades mounted on a tractor vehicle, for example, a bulldozer, are known. This type of machines has the defect of not defining a uniform and precise horizontal finishing profile for the rolling, their production being minimal compared to the power used. These types of machines are appropriate for opening tracks, but their work is imprecise, and they cannot level or smooth accurately. Furthermore, this type of machines, if there is a prominent point - generally - use the rear ripper to hollow out the earth, sometimes extracting large stones that subsequently make it difficult to smooth the surface of the land. Furthermore, front loaders are unable to establish lateral slopes in the road course.

Automotive graders are machines of great precision and complicated handling. These machines are designed for finishing, defining and profiling work on weak and loose materials. They cannot simultaneously perform more than one function at a time. They require great skill on the part of the driver and have complex hydraulic and power transmission systems, they lack the possibility of compacting soils, crushing stones or milling or destroying rock formations or forest masses. Likewise, continued use in extreme conditions with hard materials, given that the leveling blade is supported by a large number of joints and moving parts, quickly produces misalignments and costly repairs while precipitating the end of the useful life of the self-propelled motor grader, since it is not designed for these purposes. In any case, these are expensive machines with poor performance, particularly on hard and rocky surfaces.

The leveling blades dragged by an agricultural tractor with wheels behind the blade, some of which can be leveled laterally to adjust the transverse level of the road, as in ES1073834U, ES1060720U, ES1060721U and ES1060722U. In this case, their penetration capacity is poor, so it is necessary to remove any prominent points before smoothing them, which means that when they work on hard or rocky surfaces they deteriorate quickly. However, they are machines that level very well on flat terrain and with the aggregate removed, such as work fields for conditioning for gravity irrigation.

Leveling caissons with laterally bounded blades are caissons pulled by tractors that, mainly, level the rolling layer, without having precision in leveling or surface smoothing or the ability to penetrate hard terrain, without also being able to confer lateral slopes. Finally, they can be pushed by compact loaders or dragged by agricultural tractors, sharing drawbacks with the systems described above.

To solve these problems, document ES1136555U describes a towing machine for leveling soils and roads that is towable by a tractor or tractor unit that is characterized in that it comprises a chassis attached to the tractor head where said chassis supports a front scarifier in three sections, one central and two laterals, which guides the scarified material towards a leveling blade that accumulates in a drawer delimited by side walls; and where the front scarifying is formed by three scarifying blades that are curved and arranged in a delta shape with respect to the direction of advance and that have interchangeable tines or tips at their lower end. The present invention aims to improve the general operation of this machine, strengthening it and avoiding structural fatigue problems of the machine and facilitating the separation of materials into coarse and fine materials and arranging them at different depths.

US2986828 discloses a combination scarifier-scraper. US7021398 discloses a box scraper attachment for mounting on the boom arms of a skid-steer vehicle or the like. US5442990 discloses a mine removal vehicle comprising a tracked vehicle, a frontal assembly operatively connected with the tracked vehicle in a liftable and lowerable manner, and a box connected to the frontal assembly which has a scarifying drum arranged in it transversely to the driving direction. US2007/025834 discloses adapter faceplates that are mountable in an out of the way condition or are removably mounted with the adapter faceplates including a latch member that can be rotated from a latched condition to an unlatched condition. US7063166 discloses an earth grooming device for attachment to a vehicle including a rectangular frame having a plurality of teeth secured to the front thereof to form a rake and a scraper blade secured to the rear of the frame. US4585075 discloses an improved soil leveling apparatus including a frame, connecting hitch means, and adjustable lost motion linkage secured to the top connection point of the hitch, and an optional scarifier assembly which is supported on a connector pivoted between the legs of the hitch.

### DISCLOSURE OF THE INVENTION

The object of the present invention is leveling equipment suitable for any type of terrain. An object of the invention is a robust and modular equipment to provide solutions to different surface maintenance cases and incorporate different optional and specific tools that allow several necessary tasks to be carried out simultaneously. This object is achieved by the invention set out in the claims.

More specifically, the invention consists of a leveling box, with a fundamentally quadrangular or rectangular structure, whose transverse front support comprises a front section in which several scarifying or scraping elements are installed, in a particular embodiment, a plurality of interchangeable tines or a serrated blade. The front transverse support is arranged in parallel with a rear transverse support that mounts at least one bolt-on leveling blade. The front transverse support and the rear transverse support are joined by two longitudinal lateral supports that support two interchangeable lower skids capable of sliding over the ground to be leveled without spilling the dragged material. The bottom point of the interchangeable ripper tines, the lower side skids and the rear blade are in the same horizontal plane.

In a particular practical embodiment, the transverse front support and the transverse rear support are also joined in their upper part by two longitudinal beams configured to support front or rear hooking devices intended to respectively pull or push the leveling box along the tractor unit and a third in the middle and above them and attached to them to serve as support for the rear hydraulic lifting cylinder, as well as the upper support to suspend the entire assembly formed by the machine.

In a particular interpretation, the aforementioned device lacks the longitudinal supports and is replaced by a plate that joins them both (transverse front support with the rear leveling blade) with holes to allow the attachment of optional auxiliary implements.

In another particular practical embodiment of the invention, the transverse front support comprises a second group of scarifying tines installed on the rear face of the transverse front support and which may have a different size than the scarifying tines located on the front face of the transverse front support. This second group of scarifying tines have the particularity of being oscillating with respect to a transverse axis parallel to the line of front scarifying tines and of reverse use, in such a way that, when the leveling box advances in a frontal direction, the tines oscillate backwards at ground level that is being leveled and raised. However, when the driver or operator of the tractor unit observes that it has not penetrated sufficiently into the ground to remove material with which to cover the existing potholes, he may operate the leveling box in the opposite direction of travel, so that the oscillating tines of the reverse use descend plowing below the horizontal plane formed by the front scarifying tines, the side skids and the rear bolt-on blade and facilitate that, in the next pass in a frontal direction, the front scarifying tines scratch the soil more deeply and the leveling blade drags enough material to fill the potholes further along the road.

In another particular practical embodiment, the leveling box has inside, in its middle part or region, second lateral skids close to the lateral supports and adjustable electrically or hydraulically. These second skids are configured to raise and lower synchronously or independently, and thus more or less nail one of the sides of the leveling box and thus provide or correct lateral slopes at the discretion of the operator.

In another particular practical embodiment, the machine of the invention comprises a folding side arm that has a blade that, in addition, is configured to be arranged straight or inclined laterally with respect to the arm and vertical inclination with respect to the direction of advance of the machine of the invention. Therefore, this lateral arm serves to bring together the aggregates that, due to the use of the path that is intended to be leveled or smoothed, have been located on the edge of the path or it will also serve to, by turning it outwards, remove any possible vegetation that invades the path or it could be used to open and clean the ditches that line the road. It also increases the effective working width of the grader and gives a second lateral slope to the road.

In another particular practical embodiment of the invention, the drawer has water dosing means that is located in the middle area of the leveling drawer and arranged transversely to the feed. In this way, at the same time that the work of leveling the road is carried out, water is dosed in the center of the leveling box so that this water mixes with the removed aggregate and wherever material is added due to an unevenness - pothole or cavity - the optimal degree of humidity is provided so that it compacts better and also mitigates dust. In this configuration, apart from the diffuser crossbar, it also includes an opening and closing valve, as well as a flow meter controlled from the driving position of the tractor unit. Logically, this embodiment involves the presence of a water tank, for which the leveling box can be located in the front part of a tractor unit that drags a tank or in the lower front part of the semi-trailer of the water tank itself.

In another particular practical embodiment, the leveling box can be used for cleaning anti-personnel mines. To do this, the leveling box is pushed into the front of a tractor unit which, while leveling and eliminating potholes, causes the explosion of any device buried or semi-buried under the rolling layer. To this end, the leveling box also includes protection with an inclination of approximately 45° both at the front and at the rear configured to project fragments of shrapnel and/or stones forward and downward, protecting people and equipment.

In another non-limiting practical embodiment, the leveling box comprises a front hitch device to which a drawbar is attached, where the lance can be fixed - to be dragged by the drawbars of the tractor unit - hydraulically operated for up-down and/or right-left rotation movements. In the same way, a rear axle is coupled to the rear hitch device that raises or lowers the leveling box hydraulically, as well as to confer lateral slopes precisely, through the lateral rotation of said axle. In addition, this shaft also serves to attach other auxiliary tools, such as compaction rollers, scarifiers or reverse rotation stabilizers, with or without an upper hopper for dosing mineral or chemical binder additives.

The fact of attaching a lance in the front part and an axle in the rear part improves the ability of the leveling box to precisely smooth the ground since the set formed will have more weight and, consequently, greater penetration capacity. Furthermore, the support distance in this case - rear axle of the tractor and rear axle of the grader - will be much greater than that formed by the four support points of the dozer alone.

In another non-limiting practical interpretation, the present invention can be configured so that the leveling box is coupled to the rear part of the transverse rear support by means of a quick coupling plate as usual in CTL compact loaders (of COMPACT TRACK LOADER).

In another particular practical embodiment of the invention, the leveling box has in its upper part a laser receiver configured to receive a signal emitted by a transmitter configured to operate hydraulic means for raising and lowering the box, in such a way that Surfaces can be leveled automatically.

The present invention, when advancing (by dragging or pushing by the tractor unit), the front scarifying tines scratch the highest points of the surface to be leveled, removing the prominent points of the surface to be leveled. Next, the materials removed and lodged inside the drawer will be dragged until a pothole or any surface below the horizontal level is found between the skids and the blade where they are deposited.

The aforementioned configuration of the aforementioned invention of a front bar, horizontal and transverse to the direction of advance followed by another rear support of a leveling blade laterally bounded by two skids and all of this aligned on the same lower plane makes it possible for the aggregates of medium or large size particles existing on the surface to be leveled are dragged forward as if it were a rake so that they are accommodated in the depths of the potholes or longitudinal rivulets caused by erosion and subsequently covered superficially by the fine aggregates dragged by the rear leveling blade.

Furthermore, the leveling equipment of the invention, due to its modularity, allows various auxiliary tools to be attached to it to solve complex or specific tasks and increase its productivity, performing simultaneous tasks in leveling or to provide it with greater precision in carrying out these tasks.

Thanks to the present invention, land leveling equipment is obtained that is very simple to operate by inexperienced drivers and that can be dragged or pushed by a wide variety of vehicles such as common agricultural tractors, loaders, CTL compact loaders, forklifts or telehandlers of any power and motorization, as well as military vehicles, compact mini loaders and which also, through their use, classify and distribute depending on the volumetry of the aggregates used for leveling the surfaces.

### BRIEF DESCRIPTION OF THE DRAWINGS

To complement the description that is being made and in order to help a better understanding of the characteristics of the invention, a set of drawings is attached as an integral part of said description, where, with an illustrative and non-limiting nature, has represented the following:

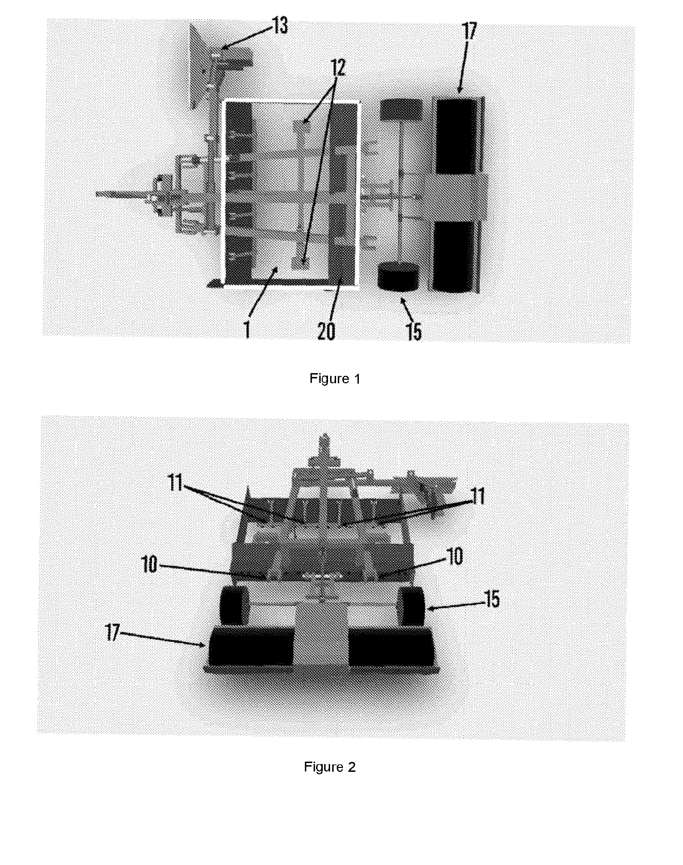

Figure 1.- Shows a view of the land leveling machine of the invention.
Figure 2.- Shows another view of the leveling machine of the invention.

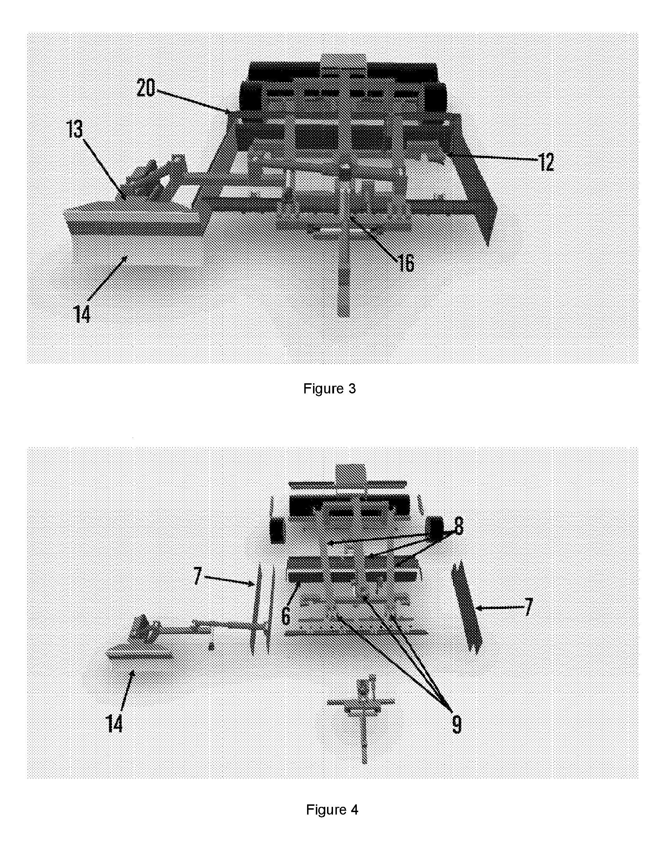

Figure 3.- Shows another view of the leveling machine of the invention.
Figure 4.- Shows an exploded view of the leveling machine of the invention.
Figure 5.- Shows another exploded view of the leveling machine of the invention.
Figure 6.- Shows a practical embodiment of the machine of the invention.
Figure 7.- Shows a second view of the practical implementation of figure 6.

With reference to the indicated figures, the following numerical references have been used:
1. Leveling drawer
2. Front cross support
3. Rear transverse support
4. Lateral supports
5. Front scratching/scarifying tines
6. Rear dozer blade
7. Side skids
8. Central longitudinal profiles
9. Front hitch element
10. Rear thrust element
11. Oscillating scraper tines
12. Tilt Skates
13. Folding side arm
14. Side leveling blade
15. Articulated rear axle
16. Vertical joint
17. Compactor roller
20. Superior anti-deflagration protections

### PREFERRED EMBODIMENT OF THE INVENTION

With reference to the attached figures, the land leveling machine according to the present invention comprises a leveling box (1) preferably consisting of a welded chassis and comprising a front transverse support (2) and a rear transverse support (3), parallel to each other and in a horizontal position with respect to the ground, both supports being transverse in the direction of advance of the machine. Both transverse supports (2,3) are secured to each other by two longitudinal lateral supports (4) and in their upper part and in the center two longitudinal drag profiles and one support profile in the center of them and above. Also, in a particular interpretation, these three longitudinal profiles can be replaced by a central plate that provides rigidity to the assembly and serves as a base plate to attach other optional pieces to the leveling body.

A plurality of interchangeable scarifying or scraping tines (5) that are inclined at 45° with respect to the ground are accommodated on the front transverse support (1), in a particular non-limiting embodiment. The lower point of the interchangeable scarifying tines (5), in addition, are aligned horizontally with the lower surface of lateral skids (7) integrally attached to the longitudinal side supports (4) and with the lower edge of a leveling blade (6) integrally attached to the rear transverse support (3) by its lower part.

As can be seen, the leveling box (1) is delimited by the transverse supports (2,3) and the lateral supports (4). This essential configuration allows that, when the machine advances in the forward direction, all the elements described - the scraper tines (5) located on the front transverse support (2) and aligned with the side skids (7) and the leveling blade (6) - are resting on the ground and, due to their own weight, the tines (5) scrape the highest points, removing the protruding material, classifying or dragging the thickest aggregates until they settle in a pothole or dip that will be dragged by the leveling blade (6) and that it will not spread on the sides due to the presence of the skids (7), which also act as a support and maintain the height both to scrape material in the high points and to deposit material in the holes.

In the non-limiting example shown in the attached figures, on the front transverse support (2), on its rear side and oriented in the direction of travel of the tractor unit, one or more oscillating scraper tines (11) are mounted, which, in the forward direction, the oscillating scraper tines (11) oscillate backwards to the level of the ground being leveled. However, when the driver or operator of the tractor unit observes that it has not penetrated the ground sufficiently to remove material with which to cover the existing potholes, will be able to operate the drawer (1) in the opposite direction to the direction of advance, so that the oscillating scraper tines (11) can penetrate the soil and facilitate, the scarifying tines (5) located on the front cross support (2) scratch the ground and the leveling blade (6) drags enough material to fill the potholes in the road.

The oscillating scraper tines (11) have - in a non-limiting example - an inclination of approximately 45° with respect to the horizontal defined by the ground and their lower end is located facing the rear (defined by the direction of advance). Therefore these oscillating scraper tines (11) are only stuck due to their weight and the pressure transmitted by the tractor unit when it acts in reverse and no more than about 5-7 centimeters deep.

In this example, the box (1) comprises central longitudinal profiles or stringers (8) that, in its front part it includes front hooking elements (9) and in its rear part, rear push elements (10) but it can also have the central plate that serves as a base for hooking other implements.

In the figures, the machine of the invention includes tilting skids (12). These skids are electrically or hydraulically actuatable. These inclination skates (12), in addition, are configured to raise and lower synchronously or independently, and thus more or less nail one of the sides of the leveling box and thus provide or correct lateral slopes at the discretion of the operator.

The folding side arm (13) that has a lateral leveling blade (13) which, in addition, is configured to be arranged straight or laterally inclined with respect to the axis of the arm (13) and vertical inclination with respect to the direction of advance of the machine. Thus, this lateral arm (13) serves to accelerate the aggregates that, due to the use of the path that is intended to be leveled or smoothed, have been located on the edge of it or will also serve to, by turning it outwards, remove any possible vegetation that invade the road or may be used to open and clean the ditches that border the road. It also increases the effective working width of the leveling box (1) and gives slope to the road.

The front coupling element (9) of the leveling box (1) has a driving element attached, which in this example is a vertical joint (16). In the same way, an articulated rear axle (15) is coupled to the rear hitch element (10) that raises or lowers the rear part of the leveling box (1) hydraulically, as well as to confer lateral slopes precisely, by means of the rotation of said rear axle with respect to the plane of the leveling box (15). In addition, this shaft also serves to attach other auxiliary tools, such as a compaction roller (17) or a reverse rotation stabilizer to mix additives, with or without a hopper or an additional pusher blade, these implements being hydraulically liftable.

Finally, the leveling box (1) comprises anti-deflagration protections (20) with an inclination of approximately 45° at the rear configured to project fragments of shrapnel and/or stones forward and downward, protecting people and equipment, in eminently military uses.

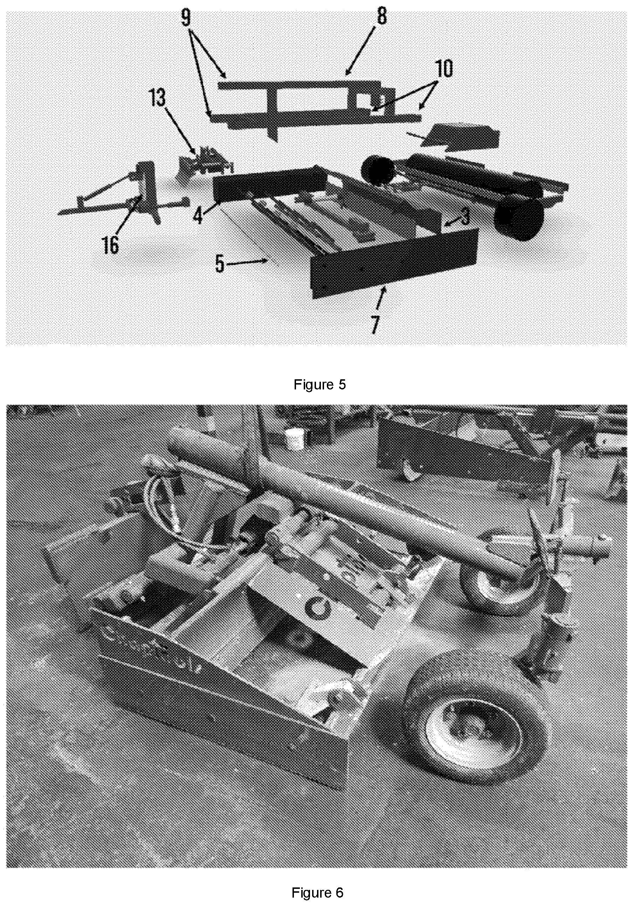

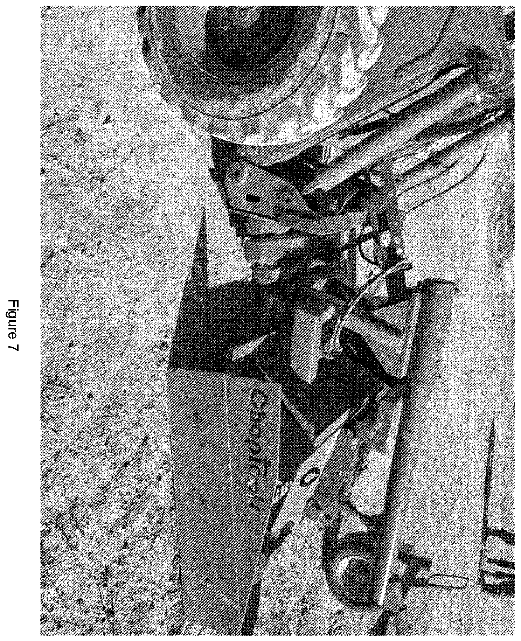

Figures 6 and 7 show another practical embodiment of the invention, so that the leveling box is coupled to the rear part of the transverse rear support by means of a quick coupling plate as is usual in CTL compact loaders (of COMPACT TRACK LOADER). This quick coupling plate may have various configurations, as many as the different brands can adopt, this being not a determining factor.

The front transverse support and the rear transverse support will be solidly joined by a plate in the central body of the leveling box. Said plate will have various holes that will serve as a base support where fixing hooks configured to attach other optional elements such as:
A superstructure to be able to level the floors more quickly and accurately as it is equipped in its front part with one or two wheels that pivot in the vertical plane so that it serves as support for the front part of the grader and is oriented whether the leveling assembly is moving forward or backward. The height control of the transverse rear support, which supports the leveling blade, is operated very precisely since supporting the lifting arms of the compact loader at its lower support point in this way, the coupling plate of the CTL compact loader implements is tilted forward or backward.

This implement coupling plate will be joined to another coupling plate that will be part of the superstructure attachable to the leveling box and which (the coupling plate) will have on its front part with respect to the direction of advance when it is working a horizontal axis moved forward and at an approximate (non-limiting) distance of 20 cm with respect to the lower tilting axis of the hitch plate of the CTL loader and transverse to the direction of advance of the CTL compact loader so that when operating by tilting the coupling plate of the transverse CTL forward, lower it and by operating the coupling plate backwards, the transverse shaft will raise the rear part of the superstructure where the leveling body is hooked. In the same way, the superstructure may tilt with respect to the coupling plates to enable the leveling box to confer lateral slopes with respect to the transverse horizontal of the CTL compact loader.

In the same way, to this coupling plate located in the center, a body shaped like a truncated pyramid deviated from its axis can be attached to the fixing holes to serve as a hitch for an agricultural tractor and that the leveling body It operates dragged and can be lifted by the drawbars.

## Claims

1. A land leveling machine that it comprises:
a leveling box (1) made up of a front transverse support, a rear transverse support (3), wherein the front transverse support and the rear transverse support (3) are parallel to each other and in a horizontal position with respect to the ground, wherein the front transverse support and the rear transverse support (3) are transverse in the direction of advance of the land leveling machine, wherein the front transverse support and the rear transverse support (3) are also integral with each other by two longitudinal lateral supports (4);
a plurality of scarifying or scraping elements (5) accommodated on the front transverse support (1); and
a leveling blade (6) integrally joined to the rear transverse support (3) by its lower part;
**characterized in that** it further comprises lateral skates (7) integrally attached to the longitudinal lateral supports (4); and
wherein the plurality of scarifying or scraping elements (5) and are horizontally aligned at their lower point with a lower surface of the lateral skates (7) and with the lower edge of the leveling blade (6).

2. The leveling machine according to claim 1 where on the front transverse support, on its rear side and oriented in the direction of travel of the tractor unit, one or more oscillating scraper tines (11) are mounted and whose tips are oriented in the opposite direction to the direction of advance of the machine

3. The leveling machine according to claim 1 or 2 that comprises central longitudinal profiles or beams (8) that, in their front part, comprise front hooking elements (9) and in its rear part, rear hitch elements (10) connectable with a tractor unit.

4. The leveling machine with respect to claim 1 or 2 wherein the leveling body comprises a central plate in the central part that joins the front crossbar with the rear one and this central plate has fixing holes or fixing elements to be pushed or dragged by elements from their top.

5. The leveling machine according to any one of the preceding claims that includes electrically or hydraulically actuatable tilt skids (12) and that are configured to raise and lower synchronously or independently.

6. The leveling machine according to any one of the previous claims that includes a folding side arm (13) that has a lateral leveling blade (14) that, in addition, is configured to be arranged straight or inclined laterally with respect to an axis of the arm (13) and vertical inclination with respect to the direction of advance of the machine

7. The leveling machine according to any one of the previous claims that includes a front hooking element (9) of the leveling box (1) that has a vertical joint (16) attached.

8. The leveling machine according to any one of the preceding claims that includes a rear hitch element (10) where an articulated rear axle (15) configured to hydraulically raise or lower the leveling box (1) is coupled, as well as a joint hydraulics to confer lateral slopes.

9. The leveling machine according to claim 7 comprising a compaction roller (17) coupled to the articulated rear axle (15) or other auxiliary tools with hydraulic lifting.

10. The leveling machine according to any one of the previous claims that includes anti-deflagration protections (20) in the rear and/or front part of the leveling box (1), the anti-deflagration protections (20) being configured to project the fragments of shrapnel and/or stones forward and downward, protecting people and equipment, in eminently military uses.

11. The leveling machine according to any one of the preceding claims wherein one or more scarifying or scraping elements are selected from a plurality of scarifying tines and/or a serrated blade.

12. The leveling machine according to any one of the preceding claims comprising means for connecting with the lower front part of a liquid tank and to which are coupled means for distributing said liquid contained in the tank inside the leveling drawer (1).

13. The leveling machine according to any one of the previous claims that comprises a rear blade oriented in the opposite direction to the direction of advance of the leveling drawer (1).

14. The leveling machine according to claim 4 wherein on the central plate that serves as a base for attaching implements, a truncated pyramid-shaped body is attached with coupling claws at the bottom and three attachment points to be connected to a three-point lifting system of an agricultural tractor.

## Patentansprüche

1. Eine Geländenivellierungsmaschine, bestehend aus:
eine Nivellierbox (1), bestehend aus einer vorderen Querstütze und einer hinteren Querstütze (3), wobei die vordere Querstütze und die hintere Querstütze (3) parallel zueinander und horizontal zum Boden ausgerichtet sind und quer zur Vorschubrichtung der Nivelliermaschine verlaufen.
wobei die vordere Querstütze und die hintere Querstütze (3) durch zwei längsseitige Stützen (4) ebenfalls fest miteinander verbunden sind;
eine Vielzahl von Fräs- oder Schabelementen (5), die an der vorderen Querstütze (1) angeordnet sind; und
ein Nivellierblatt (6), das mit seinem unteren Teil fest mit der hinteren Querstütze (3) verbunden ist;
**dadurch gekennzeichnet, dass** es ferner seitliche Gleitstücke (7) umfasst, die fest mit den längsseitigen Stützen (4) verbunden sind; und
wobei die Vielzahl der kratzenden oder schabenden Elemente (5) an ihrem unteren Punkt horizontal mit einer Unterseite der seitlichen Gleitkufen (7) und mit der Unterkante des Nivellierblatts (6) ausgerichtet ist.

2. Die Nivelliermaschine nach Anspruch 1, bei der an der vorderen Querstütze, an deren Rückseite und in Fahrtrichtung der Traktoreinheit ausgerichtet, ein oder mehrere oszillierende Abstreifzinken (11) angebracht sind, deren Spitzen in die der Vorwärtsrichtung der Maschine entgegengesetzte Richtung zeigen.

3. Die Nivelliermaschine nach Anspruch 1 oder 2, die zentrale Längsprofile oder -träger (8) umfasst, die in ihrem vorderen Teil vordere Hakenelemente (9) und in ihrem hinteren Teil hintere Anhängeelemente (10) aufweisen, die mit einer Traktoreinheit verbunden werden können.

4. Die Nivelliermaschine nach Anspruch 1 oder 2, wobei der Nivellierkörper eine Mittelplatte im Mittelteil aufweist, die die vordere Querstange mit der hinteren verbindet, und diese Mittelplatte Befestigungslöcher oder Befestigungselemente aufweist, die von Elementen von ihrer Oberseite geschoben oder gezogen werden.

5. Die Nivelliermaschine nach einem der vorhergehenden Ansprüche, die elektrisch oder hydraulisch betätigbare Kippkufen (12) umfasst, die so konfiguriert sind, dass sie synchron oder unabhängig voneinander angehoben und abgesenkt werden können.

6. Die Nivelliermaschine nach einem der vorhergehenden Ansprüche, die einen klappbaren Seitenarm (13) umfasst, der ein seitliches Nivellierblatt (14) aufweist, das außerdem so konfiguriert ist, dass es gerade oder seitlich geneigt in Bezug auf eine Achse des Arms (13) und vertikal geneigt in Bezug auf die Vorschubrichtung der Maschine angeordnet ist.

7. Die Nivelliermaschine nach einem der vorhergehenden Ansprüche, die ein vorderes Hakenelement (9) des Nivellierkastens (1) mit einem daran befestigten vertikalen Gelenk (16) aufweist.

8. Die Nivelliermaschine nach einem der vorhergehenden Ansprüche, die ein hinteres Anhängeelement (10) umfasst, an dem eine gelenkige Hinterachse (15) zur hydraulischen Anhebung oder Absenkung des Nivellierkastens (1) gekoppelt ist, sowie eine Gelenkhydraulik zur Erzeugung von seitlichen Neigungen.

9. Die Nivelliermaschine nach Anspruch 7, umfassend eine Verdichtungswalze (17), die mit der gelenkigen Hinterachse (15) oder anderen Hilfseinrichtungen mit hydraulischer Hebevorrichtung gekoppelt ist.

10. Die Nivelliermaschine nach einem der vorhergehenden Ansprüche, die im hinteren und/oder vorderen Teil des Nivellierkastens (1) einen Deflagrationsschutz (20) aufweist, wobei der Deflagrationsschutz (20) so ausgelegt ist, dass er Splitter und/oder Steine nach vorne und unten ablenkt und so Personen und Ausrüstung schützt, insbesondere bei militärischen Anwendungen.

11. Die Nivellierungsmaschine nach einem der vorhergehenden Ansprüche, wobei ein oder mehrere Fräs- oder Schabelemente aus einer Vielzahl von Fräszinken und/oder einer gezahnten Klinge ausgewählt sind.

12. Die Nivelliermaschine nach einem der vorhergehenden Ansprüche, umfassend Mittel zum Anschluss an den unteren vorderen Teil eines Flüssigkeitsbehälters, an die Mittel zum Verteilen der im Behälter enthaltenen Flüssigkeit innerhalb der Nivellierschublade (1) gekoppelt sind.

13. Die Nivelliermaschine nach einem der vorhergehenden Ansprüche, die ein hinteres Messer umfasst, das in die der Vorschubrichtung des Nivellierschubladens (1) entgegengesetzte Richtung ausgerichtet ist.

14. Die Nivelliermaschine nach Anspruch 4, bei der auf der als Basis für die Befestigung von Anbaugeräten dienenden Mittelplatte ein pyramidenstumpfförmiger Körper mit Kupplungsklauen an der Unterseite und drei Befestigungspunkten zur Verbindung mit einem Dreipunkt-Hebesystem eines landwirtschaftlichen Traktors angebracht ist.

## Revendications

1. Une machine de nivellement de terrain qui comprend :
une boîte de nivellement (1) composée d'un support transversal avant, d'un support transversal arrière (3), dans lequel le support transversal avant et le support transversal arrière (3) sont parallèles entre eux et en position horizontale par rapport au sol, dans lequel le support transversal avant et le support transversal arrière (3) sont transversaux dans la direction d'avancement de la machine de nivellement de terrain,
dans lequel le support transversal avant et le support transversal arrière (3) sont également solidaires l'un de l'autre par deux supports latéraux longitudinaux (4) ;
une pluralité d'éléments de scarification ou de raclage (5) montés sur le support transversal avant (1) ; et
une lame de nivellement (6) solidaire du support transversal arrière (3) par sa partie inférieure ;
**caractérisé en ce qu'**il comprend en outre des patins latéraux (7) solidaires des supports latéraux longitudinaux (4) ; et
dans lequel la pluralité d'éléments de scarification ou de raclage (5) et sont alignés horizontalement à leur point inférieur avec une surface inférieure des patins latéraux (7) et avec le bord inférieur de la lame de nivellement (6).

2. La machine de nivellement selon la revendication 1, dans laquelle sur le support transversal avant, sur sa face arrière et orientée dans le sens de déplacement du tracteur, une ou plusieurs dents de racleur oscillantes (11) sont montées et dont les extrémités sont orientées dans la direction opposée à celle de l'avancement de la machine.

3. La machine de nivellement selon la revendication 1 ou 2 qui comprend des profils ou poutres longitudinales centrales (8) qui, dans leur partie avant, comprennent des éléments d'accrochage avant (9) et dans leur partie arrière, des éléments d'attelage arrière (10) connectables à un tracteur.

4. La machine de nivellement selon la revendication 1 ou 2, dans laquelle le corps de nivellement comprend une plaque centrale dans la partie centrale qui relie la traverse avant à la traverse arrière et cette plaque centrale comporte des trous de fixation ou des éléments de fixation qui peuvent être poussés ou tirés par des éléments depuis leur partie supérieure.

5. La machine de nivellement selon l'une quelconque des revendications précédentes qui comprend des patins inclinables actionnables électriquement ou hydrauliquement (12) et qui sont configurés pour monter et descendre de manière synchrone ou indépendante.

6. La machine de nivellement selon l'une quelconque des revendications précédentes qui comprend un bras latéral pliable (13) qui a une lame de nivellement latérale (14) qui, en outre, est configurée pour être disposée droite ou inclinée latéralement par rapport à un axe du bras (13) et en inclinaison verticale par rapport à la direction d'avancement de la machine.

7. La machine de nivellement selon l'une quelconque des revendications précédentes qui comprend un élément d'accrochage avant (9) de la boîte de nivellement (1) auquel est fixé un joint vertical (16).

8. La machine de nivellement selon l'une quelconque des revendications précédentes qui comprend un élément d'attelage arrière (10) où un essieu arrière articulé (15) configuré pour lever ou abaisser hydrauliquement la boîte de nivellement (1) est couplé, ainsi qu'un système hydraulique conjoint pour conférer des pentes latérales.

9. La machine de nivellement selon la revendication 7 comprenant un rouleau de compactage (17) couplé à l'essieu arrière articulé (15) ou à d'autres outils auxiliaires avec levage hydraulique.

10. La machine de nivellement selon l'une quelconque des revendications précédentes qui comprend des protections anti-déflagration (20) dans la partie arrière et/ou avant du boîtier de nivellement (1), les protections anti-déflagration (20) étant configurées pour projeter les fragments d'éclats d'obus et/ou de pierres vers l'avant et vers le bas, protégeant les personnes et l'équipement, dans des utilisations éminemment militaires.

11. La machine de nivellement selon l'une quelconque des revendications précédentes, dans laquelle un ou plusieurs éléments de scarification ou de raclage sont sélectionnés parmi une pluralité de dents de scarification et/ou une lame dentelée.

12. La machine de nivellement selon l'une quelconque des revendications précédentes comprenant des moyens de connexion à la partie avant inférieure d'un réservoir de liquide et auxquels sont couplés des moyens de distribution dudit liquide contenu dans le réservoir à l'intérieur du tiroir de nivellement (1).

13. La machine de nivellement selon l'une quelconque des revendications précédentes qui comprend une lame arrière orientée dans la direction opposée à la direction d'avancement du tiroir de nivellement (1).

14. La machine de nivellement selon la revendication 4, dans laquelle sur la plaque centrale servant de base à la fixation d'outils, un corps en forme de pyramide tronquée est fixé avec des griffes de couplage en bas et trois points de fixation à connecter à un système de levage à trois points d'un tracteur agricole.
